# EUROPÄISCHE PATENTSCHRIFT

(11) **EP 3 401 124 B1**
(45) Veröffentlichungstag und Bekanntmachung des Hinweises auf die Patenterteilung: **19.02.2020**
(21) Anmeldenummer: 18158729.6
(22) Anmeldetag: 27.02.2018
(51) Int. Cl.: B60C 11/12, B60C 11/11

(54) **LAUFSTREIFENPROFIL EINES FAHRZEUGREIFENS**
RUN STRIP PROFILE OF A VEHICLE TYRE
PROFILÉ DE BANDE ROULEMENT D'UN PNEU DE VÉHICULE

(30) Priorität: 12.05.2017 DE 102017208053
(43) Veröffentlichungstag der Anmeldung: 14.11.2018
(73) Patentinhaber: Continental Reifen Deutschland GmbH, 30165 Hannover (DE)
(72) Erfinder: Jackstadt, Michael, 30989 Gehrden (DE); Seng, Matthias, 30453 Hannover (DE)
(74) Vertreter: Finger, Karsten

(56) Entgegenhaltungen:
- EP-A1- 1 073 562
- EP-A1- 3 366 494
- EP-A2- 0 847 878

## Beschreibung

Die Erfindung betrifft ein Laufstreifenprofil eines Fahrzeugreifens - insbesondere eines PKW-Fahrzeugreifens - mit durch Rillen begrenzten Profilelementen und mit in Profilelementen ausgebildeten Feineinschnitten, wobei die Profilelemente in radialer Richtung R nach außen hin von einer radial äußeren Oberfläche und die Feineinschnitte nach radial innen hin von einem Einschnittgrund und beiderseits des Einschnittgrunds jeweils von einer Einschnittwand begrenzt werden, wobei der Feineinschnitt jeweils mit einer Dicke D ausgebildet ist, mit Feineinschnitten, die mit voneinander beabstandet angeordneten, begrenzten Erstreckungsabschnitten ausgebildet sind, in denen der Feineinschnitt mit einer Dicke D' mit D'≠D ausgebildet ist, wobei der begrenzte Erstreckungsabschnitt jeweils durch eine in einer der beiden Einschnittwände in radialer Richtung R erstreckte Nut oder Rippe mit einer in radialer Richtung R in der Einschnittwand gemessenen Erstreckungslänge H₂ ausgebildet ist, wobei längs der Erstreckung des Feineinschnitts in seiner Erstreckungsrichtung in der radial äußeren Oberfläche die in einer Einschnittwand des Feineinschnittes jeweils von einander beanbstandeten, begrenzten Erstreckungsabschnitte mit einer Dichte F verteilt angeordnet sind, wobei die Dichte F die Zahl der längs der Erstreckung des Feinschnitts pro cm Länge ausgebildeten Erstreckungsabschnitte angibt.

Derartige Fahrzeugluftreifen sind bekannt.

Es ist bekannt, Laufstreifenprofile von Pkw-Fahrzeugluftreifen zur Erzielung guter Griffeigenschaften auf Schnee und Eis und somit zur Erzielung guter Wintergriffeigenschaften mit Feineinschnitten in den durch Rillen begrenzten Profilblockelementen auszubilden. Die Feineinschnitte weisen dabei zusätzliche Griffkanten für besseren Griff auf Schnee und Eis auf. Beim Abrollen wird durch Öffnen und Schließen der Feineinschnitte zusätzlich Schnee bzw. Matsch eingeschlossen, wodurch auch der Schnee-Schneegriff verbessert wird. Die üblichen Feineinschnitte sind dabei mit korrespondierend zueinander ausgebildeten Einschnittswänden mit im wesentlichen gleicher Feineinschnittdicke ausgebildet, die für den Einsatz im winterlichen Betrieb optimiert sind.

Derartige übliche Winterreifen mit Feineinschnitten weisen keine zusätzliche Kühlung aus dem Profilinneren auf. Beim Einsatz derartiger, für den Winterbetrieb optimierter Reifen bei oberhalb von winterlichen Temperaturen bedingten Einsatzbedingungen steigen die im Betrieb im Reifen auftretenden Temperaturen, wodurch auch Abrieb und Fahreigenschaften mit beeinflusst werden. Daher ist es wünschenswert, gerade für einen Einsatz bei höheren, eher sommerlichen Temperaturen zur Reduktion der temperaturbedingten Nachteile die im Reifenprofil erzeugten Temperaturen durch gezielte Kühlung im Laufstreifenprofil zu reduzieren.

Es ist auch bekannt, zur Erhöhung der Steifigkeit von Profilblockelementen von Winterreifen die Feineinschnitte der Profilblockelemente mit einer dreidimensionalen Struktur auszubilden, wobei die beiden den Feineinschnitt begrenzenden Einschnittwände mit einem im Wesentlichen korrespondierenden Erstreckungsverlauf ausgebildet sind.

Auch die bekannten dreidimensionalen Feineinschnitte sind im Wesentlichen für den winterlichen Betrieb ausgebildet. Die dünnen Feineinschnitte mit ihrer dreidimensionalen Struktur sind dabei für zusätzliche Kühlung nicht geeignet. Um in diesen Feineinschnitten Kühleffekte wirksam werden zu lassen, müssten diese Feineinschnitte mit großer Dicke ausgebildet werden, wodurch jedoch ihre Versteifungswirkung und somit die Wintereignung wieder reduziert würde. Der durch den Feineinschnitt erzielte Negativanteil des Profils würde somit deutlich erhöht werden, wodurch auch die Abriebeigenschaften zusätzlich negativ beeinflusst werden könnten.

Darüber hinaus wird die Kühlung dabei im Wesentlichen über das Laufstreifenprofil hinweg gleichmäßig stark ausgebildet. Die Feineinschnitte des Laufstreifens werden daher entweder so dick ausgebildet, dass der stärker erhitzte Schulterbereich gekühlt wird. In diesem Fall ist der Void-Anteil im gesamten Laufstreifen mit den o.g. Nachteilen besonders groß. Oder die Feineinschnitte sind im gesamten Laufstreifenbereich so dick ausgebildet, dass sie den weniger stark erhitzten mittleren Laufstreifenbereich bedingt kühlen können. Dann ist zwar das im gesamten Laufstreifenbereich erzielte Void geringer bei geringeren Nachteilen im Abrieb. Allerdings ohne besondere Kühlungswirkung des gerade besonders erhitzten Schulterbereichs.

### Aus der JP 2011073471 A ist ein Laufstreifenprofil eines Fahrzeugreifens gemäß den Merkmalen des Anspruchs 1 bekannt.

Der Erfindung liegt daher die Aufgabe zugrunde, derartige Laufstreifenprofile mit Feineinschnitten zu ermöglichen, bei denen trotz geringem Void eine bessere Kühleffekte des Laufstreifenprofils entsprechend den Erfordernissen im Reifen ermöglicht wird.

Die Aufgabe wird erfindungsgemäß durch die Ausbildung eines Laufstreifenprofils eines Fahrzeugreifens - insbesondere eines PKW-Fahrzeugreifens - mit durch Rillen begrenzten Profilelementen und mit in Profilelementen ausgebildeten Feineinschnitten, wobei die Profilelemente in radialer Richtung R nach außen hin von einer radial äußeren Oberfläche und die Feineinschnitte nach radial innen hin von einem Einschnittgrund und beiderseits des Einschnittgrunds jeweils von einer Einschnittwand begrenzt werden, wobei der Feineinschnitt jeweils mit einer Dicke D ausgebildet ist, mit Feineinschnitten, die mit voneinander beabstandet angeordneten, begrenzten Erstreckungsabschnitten ausgebildet sind, in denen der Feineinschnitt mit einer Dicke D' mit D'≠D ausgebildet ist, wobei der begrenzte Erstreckungsabschnitt jeweils durch eine in einer der beiden Einschnittwände in radialer Richtung R erstreckte Nut oder Rippe mit einer in radialer Richtung R in der Einschnittwand gemessenen Erstreckungslänge H₂ ausgebildet ist, wobei längs der Erstreckung des Feineinschnitts in seiner Erstreckungsrichtung in der radial äußeren Oberfläche die in einer Einschnittwand des Feineinschnittes jeweils von einander beabstandeten, begrenzten Erstreckungsabschnitte mit einer Dichte F verteilt angeordnet sind, wobei die Dichte F die Zahl der längs der Erstreckung des Feinschnitts pro cm Länge ausgebildeten Erstreckungsabschnitte angibt, gemäß den Merkmalen von Anspruch 1 gelöst, bei dem im Bereich der Reifenschultern Profilelemente mit ersten Feineinschnitten mit einer Dichte F₁ von in einer Einschnittwand begrenzten Erstreckungsabschnitten ausgebildet sind und dass in wenigstens einem zwischen den Reifenschultern ausgebildeten, axialen mittleren Erstreckungsbereich des Reifens Profilelemente mit zweiten Feineinschnitten mit einer Dichte F₂ mit F₁>F₂ in einer Einschnittwand begrenzten Erstreckungsabschnitten ausgebildet sind, wobei die Position der maximalen Tiefe T**_{MAX}** der Nut bzw. der Rippe im mittleren Drittel der radialen Erstreckungslänge H₂ der Nut bzw. der Rippe ausgebildet ist.

Die Ausbildung ermöglicht es in einfacher Weise, direkt in den Feineinschnitten mit Hilfe der Nuten bzw. Rippen längs der Erstreckung der Feineinschnitte verteilte, zusätzliche Oberflächen zur Abgabe von Wärme an die Luft bereitzustellen und dabei auch unter Beibehaltung üblicher, für Griffoptimierung bewährter Feineinschnittsdicken die erwärmte Luft auf kurzem Weg zur radial äußeren Oberfläche abzuleiten. Hierdurch können die sonstigen durch den Feineinschnitt bewirkten Eigenschaften des Profilblockelementes zur Herstellung eines besseren Grips insbesondere auf Schnee und Eis sowie auf nasser Straßenoberfläche wirksam aufrechterhalten bleiben. Dabei wird die Kühlwirkung durch die unterschiedliche Dichte der Anordnung der Nuten bzw. Rippen in dem unterschiedlich thermisch belasteten Schulter- und Laufstreifenmittenbereich auch dem dort unterschiedlichen Wärmeeintrags entsprechend optimal abgeleitet. Dabei kann in dem besonders thermisch belasteten Schulterbereich aufgrund der höheren Dichte der Anordnung von Nuten bzw. Rippen die dort anfallende erhöhte Wärme optimiert abgeleitet werden. Im mittleren Laufstreifenbereich ermöglicht die geringere Dichte an Nuten bzw. Rippen entsprechend der dort anfallenden geringeren Wärmewirkung auch eine geringere Kühlwirkung, wobei die gerade im mittleren Laufstreifenbereich durch die geringere Dichte von Nuten bzw. Rippen ausgebildeten Profilelemente ohne zusätzliche Änderungen der Feineinschnitte mit der dort gewünschten, besondere Abrieboptimierung und Nassgriffoptimierung ausgebildet werden können. Durch die Positionierung der maximalen Tiefe der Nut bzw. der Rippe sind die Erstreckungsbereiche der Tiefenveränderung ausreichend groß, um die Vorteile der Nut bzw. der Rippe in einfacher Weise optimiert umsetzen zu können.

Besonders vorteilhaft ist die Ausbildung eines Fahrzeugreifens gemäß den Merkmalen von Anspruch 2, wobei F₁ mit 1 ≤ F₁ ≤ 4 ausgebildet ist. Hierdurch ist die Dichte von Nuten bzw. Rippen in der besonders wärmebelasteten Reifenschulter ausreichend hoch gewählt für die in diesem Bereich wirksamen verstärkten Kühleffekte bei Aufrechterhaltung guter Entformbarkeit.

Besonders vorteilhaft ist die Ausbildung eines Fahrzeugreifens gemäß den Merkmalen von Anspruch 3, wobei F₁ mit 0,5 ≤ F₂ ≤ 3 ist. Hierdurch kann die Dichte von Nuten bzw. Rippen im weniger wärmebelasteten Mittenbereich des Laufstreifens ausreichend hoch für die in diesen Laufstreifenbereich wirksame sinnvolle Kühlung.

Besonders vorteilhaft ist die Ausbildung eines Fahrzeugreifens gemäß den Merkmalen von Anspruch 4, wobei wenigstens zwischen einer Reifenschulter und dem axial mittleren Erstreckungsabschnitt in einem axialen Zwischenabschnitt Profilelemente mit dritten Feineinschnitten mit einer Dichte F₃ von in einer Einschnittwand begrenzten Erstreckungsabschnitten ausgebildet sind mit F₁>F₃>F₂. Dies ermöglicht eine bestmögliche Abstimmung der Kühlung des Laufstreifenprofils auf den tatsächlichen Kühlbedarf.

Besonders vorteilhaft ist die Ausbildung eines Fahrzeugreifens gemäß den Merkmalen von Anspruch 5, wobei die im Bereich der Reifenschulter ausgebildeten Profilelemente Profilblockelemente einer Schulterprofilblockreihe sind. Durch diese Ausbildung kann das Abriebverhalten des Fahrzeugreifens unter Kühlung der Reifenschulter verbessert werden. Dabei können sich die Profilelemente in der Schulter unabhängiger zum restlichen Profil bewegen und die Abrollumfangs-Differenz zwischen Reifenschulter und Mitte des Laufstreifenprofils am besten ausgeglichen werden.

Besonders vorteilhaft ist die Ausbildung eines Fahrzeugreifens gemäß den Merkmalen von Anspruch 6, wobei die im zwischen den Reifenschultern ausgebildeten, axial mittleren Erstreckungsbereich des Reifenprofils ausgebildeten Profilelemente Profilblockelemente einer zentralen Profilblockreihe sind. Hierdurch können sich die Profilelemente in der Mitte des Laufstreifenprofils unabhängiger zum restlichen Profil bewegen und die Abrollumfangs-Differenz zwischen Mitte und Reifenschulter besonders gut ausgeglichen werden. Unter Nutzung der Kühlwirkung kann somit ein gutes Abriebverhalten des Laufstreifenprofils weiter verbessert werden.

Besonders vorteilhaft ist die Ausbildung eines Fahrzeugreifens gemäß den Merkmalen von Anspruch 7, wobei die in einer Einschnittwand eines Feineinschnitts ausgebildeten begrenzten Erstreckungsabschnitte jeweils voneinander, vom Einschnitttgrund und von der radial äußeren Oberflächen beabstandet angeordnet ausgebildet sind. Durch diese Ausbildung wird es ermöglicht, dass Neureifen mit ihrer hohen Profiltiefe und der damit verbundenen relativ großen Flexibilität der Profilelemente weiterhin mit für sehr guten Griff auf Schnee und Eis optimiertem Verlauf der Griffkanten der Feineinschnitte ausgebildet werden können. Trotz großer Profiltiefe und hoher Flexibilität der Profilelemente wird somit gute Griffwirkung mit geringem Abrieb und geringer Geräuschbildung gerade in dem empfindlichen ersten Lebensabschnitt eines Reifen weiterhin ermöglicht. Erst mit zunehmender Lebensdauer kommen aufgrund des Abriebs die Nuten bzw. Rippen in der Einschnittwand in Eingriff mit der Straßenoberfläche. Dabei kommt die Nut bzw. Rippe mit zunehmender Lebensdauer mit ihrer veränderten, wirksamen Nuttiefe bzw. Rippentiefe in Kontakt zur Straßenoberfläche. Dabei ist im Feineinschnitt über einen großen Erstreckungsabschnitt des Feineinschnitts die für die Griffwirkung auf Schnee und Eis optimale Feineinschnittsdicke umsetzbar. Die Ausbildung des Feineinschnittes mit den Verdickungen in Form dieser Nuten bzw. Rippen in einer Seitenwand ermöglicht eine gezielte Bereitstellung zusätzliche Oberfläche und Raum innerhalb des Feineinschnittes zur optimierten Wärmeableitung. Somit können trotz geringer üblicher Feineinschnittsdicke und somit bei weiterhin gutem Void zusätzliche Kühleigenschaften im Bereich der Feineinschnitte ermöglicht werden, ohne dabei Abrieb zu beeinträchtigen. Somit kann der Fahrzeugluftreifen für Wintereignung optimiert werden und dennoch hinsichtlich seines Einsatzes bei höheren Temperaturen verbessert werden.

Besonders vorteilhaft ist die Ausbildung eines Fahrzeugreifens gemäß den Merkmalen von Anspruch 8, wobei die den begrenzten Erstreckungsabschnitt in einer Einschnittwand eines mit Feineinschnitts bildende Nut oder Rippe sich in radialer Richtung R nach außen in der Einschnittwand bis in eine Position im Abstand H₁ > 0 von der radial äußeren Oberfläche erstreckt und dort endet. Durch diese Ausbildung wird es ermöglicht, dass Neureifen mit ihrer hohen Profiltiefe und der damit verbundenen relativ großen Flexibilität der Profilelemente weiterhin mit für sehr guten Griff auf Schnee und Eis optimiertem Verlauf der Griffkanten der Feineinschnitte ausgebildet werden können. Trotz großer Profiltiefe und hoher Flexibilität der Profilelemente wird somit gute Griffwirkung mit geringem Abrieb und geringer Geräuschbildung gerade in dem empfindlichen ersten Lebensabschnitt eines Reifen weiterhin ermöglicht. Erst mit zunehmender Lebensdauer kommen aufgrund des Abriebs die Nuten bzw. Rippen in der Einschnittwand in Eingriff mit der Straßenoberfläche. Dabei kommt die Nut bzw. Rippe mit zunehmender Lebensdauer mit ihrer veränderten, wirksamen Nuttiefe bzw. Rippentiefe in Kontakt zur Straßenoberfläche. Dabei ist im Feineinschnitt über einen großen Erstreckungsabschnitt des Feineinschnitts die für die Griffwirkung auf Schnee und Eis optimale Feineinschnittsdicke umsetzbar. Die Ausbildung des Feineinschnittes mit den Verdickungen in Form dieser Nuten bzw. Rippen in einer Seitenwand ermöglicht eine gezielte Bereitstellung zusätzliche Oberfläche und Raum innerhalb des Feineinschnittes zur optimierten Wärmeableitung. Somit können trotz geringer üblicher Feineinschnittsdicke und somit bei weiterhin gutem Void zusätzliche Kühleigenschaften im Bereich der Feineinschnitte ermöglicht werden, ohne dabei Abrieb zu beeinträchtigen. Somit kann der Fahrzeugluftreifen für Wintereignung optimiert werden und dennoch hinsichtlich seines Einsatzes bei höheren Temperaturen verbessert werden.

Besonders vorteilhaft ist die Ausbildung eines Fahrzeugreifens gemäß den Merkmalen von Anspruch 9, wobei die Nut bzw. die Rippe mit einer senkrecht zur Einschnittwand gemessenen, längs der Erstreckung der Nut bzw. der Rippe veränderten Tiefenerstreckung T ausgebildet ist, wobei die Nut bzw. die Rippe mit einem radial inneren Erstreckungsabschnitt, in welchem die Tiefe T längs der Erstreckung der Nut bzw. der Rippe von radial innen nach außen hin von T=0 bis zur Erreichung der maximalen Tiefe T_{MAX} stetig zunimmt, und mit einem radial äußeren Erstreckungsabschnitt, in welchem die Tiefe T längs der Erstreckung der Nut bzw. der Rippe von radial innen nach außen hin von der Position ihrer maximalen Tiefe T_{MAX} bis zur Erreichung der Tiefe T=0 im Abstand H₁ von der radial äußeren Oberfläche stetig abnimmt. Durch diese Ausbildung wird es ermöglicht, dass Neureifen mit ihrer hohen Profiltiefe und der damit verbundenen relativ großen Flexibilität der Profilelemente weiterhin mit für sehr guten Griff auf Schnee und Eis optimiertem Verlauf der Griffkanten der Feineinschnitte ausgebildet werden können. Trotz großer Profiltiefe und hoher Flexibilität der Profilelemente wird somit gute Griffwirkung mit geringem Abrieb und geringer Geräuschbildung gerade in dem empfindlichen ersten Lebensabschnitt eines Reifen weiterhin ermöglicht. Erst mit zunehmender Lebensdauer kommen aufgrund des Abriebs die Nuten bzw. Rippen in der Einschnittwand - jedoch ohne Unstetigkeiten im radialen Verlauf - in Eingriff mit der Straßenoberfläche. Dabei kommt die Nut bzw. Rippe mit zunehmender Lebensdauer und ohne Unstetigkeiten mit ihrer langsam veränderten, wirksamen Nuttiefe bzw. Rippentiefe in Kontakt zur Straßenoberfläche. Hierdurch kann sehr zuverlässig über die Lebensdauer des Reifen ein ungewünschter Abriss im Übergang zwischen Nut bzw. Rippe und radial oberhalb und radial unterhalb der Nut bzw Rippe ausgebildetem Erstreckungsbereich des Feineinschnittes vermieden werden, was sich positiv auf das Abriebbild auswirkt. Die Ausformung des Feineinschnitts und der in der Einschnittswand ausgebildeten Nut bzw. Rippe wird durch diese fließenden Übergänge ohne Hinterschneidungen optimiert ohne Gefahr des Einreißens ermöglicht. Dabei ist im Feineinschnitt über einen großen Erstreckungsabschnitt des Feineinschnitts die für die Griffwirkung auf Schnee und Eis optimale Feineinschnittsdicke umsetzbar. Die Ausbildung des Feineinschnittes mit den Verdickungen in Form dieser Nuten bzw. Rippen in einer Seitenwand ermöglicht eine gezielte Bereitstellung von zusätzlicher Oberfläche und Raum innerhalb des Feineinschnittes zur optimierten Wärmeableitung. Die Wärmeableitung durch im Feineinschnitt befindliche Luft oder Wasser wird dabei durch die in radialer Richtung nach innen und außen fließenden Übergänge der Nuten bzw. Rippen und hierdurch begünstigten störungsfreien Strömungen begünstigt. Somit können trotz geringer üblicher Feineinschnittsdicke und somit bei weiterhin gutem Void zusätzliche Kühleigenschaften im Bereich der Feineinschnitte ermöglicht werden, ohne dabei Abrieb oder Rollwiderstand zu beeinträchtigen. Somit kann der Fahrzeugluftreifen für Wintereignung optimiert werden und dennoch hinsichtlich seines Einsatzes bei höheren Temperaturen verbessert werden.

Besonders vorteilhaft ist die Ausbildung eines Fahrzeugreifens gemäß den Merkmalen von Anspruch 10, wobei der radial äußere Erstreckungsabschnitt der Nut bzw. der Rippe unmittelbar an den radial inneren Erstreckungsabschnitt der Nut bzw. der Rippe anschließt. Hierdurch kann die Ausdehnung der Nut bzw. der Rippe optimal zur Umsetzung guter Entformbarkeit bei guten Abriebeigenschaften genutzt werden.

Besonders vorteilhaft ist die Ausbildung eines Fahrzeugreifens gemäß den Merkmalen von Anspruch 11, wobei der die Nut bzw. die Rippe nach radial innen hin begrenzende Nutanfang bzw. Rippenanfang in der Einschnittwand in einer Position im in radialer Richtung R nach außen hin gemessenen Abstand H₃ > 0 - insbesondere wobei mit 0,5mm ≤ H₃ ausgebildet ist - vom Einschnittgrund ausgebildet ist. Hierdurch kann bei guter Entformbarkeit, guter Kühl- und Abriebeigenschaften die Möglichkeit von Rissbildungen weiter reduziert werden.

Besonders vorteilhaft ist die Ausbildung eines Fahrzeugreifens gemäß den Merkmalen von Anspruch 12, wobei die maximale Tiefe T_{MA}x mit 0,3mm≤ T_{MA}x ≤1mm ausgebildet ist. Dies ermöglicht in einfacher Weise die Umsetzung eines ausreichend wirksamen Kühleffekts bei zur Erzielung guter Abriebeigenschaften ausreichend geringem NegativAnteil (Void) und bei zur Erzielung guter Handling-Eigenschaften ausreichender Blocksteifigkeit.

Besonders vorteilhaft ist die Ausbildung eines Fahrzeugreifens gemäß den Merkmalen von Anspruch 13, wobei die Nut bzw. die Rippe längs ihrer radialen Erstreckung von innen nach außen im radial inneren Erstreckungsabschnitt in ihrem Tiefenverlauf ausgehend von einer Position mit T=0 bis zur Position der maximalen Tiefe T_{MAX} mit degressiv zunehmender Tiefe und im radial äußeren Erstreckungsabschnitt ausgehend von der Position ihrer maximalen Tiefe T_{MAX} bis zur Erreichung Position der Tiefe T=0 mit progressiv abnehmender Tiefe ausgebildet ist. Hierdurch kann die zur Kühlung wirksame Ausdehnung der Nut optimiert und dabei Rissbildungen im Erstreckungsbereich der Nut vermieden werden.

Besonders vorteilhaft für eine optimierte Wärmeabfuhr ist die Ausbildung eines Fahrzeugreifens gemäß den Merkmalen von Anspruch 14, wobei die Nut bzw. die Rippe mit ihrer Haupterstreckungsrichtung in der Einschnittwand unter Einschluss eines Neigungswinkels α zur radialen Richtung R des Reifens mit 0°≤α≤20° ausgerichtet ist.

Besonders vorteilhaft ist die Ausbildung eines Fahrzeugreifens gemäß den Merkmalen von Anspruch 15, wobei längs der Erstreckung des Feineinschnitts in der radial äußeren Oberläche in einer Einschnittwand mehrere derartige Nuten bzw. Rippen verteilt hintereinander angeordnet sind, wobei benachbart hintereinander angeordnete Nuten bzw. Rippen einer Einschnittwand jeweils mit in der Einschnittwand gemessenem Abstand d mit 3mm≤d≤20mm zueinander positioniert sind. Durch diese Ausbildung ist eine optimierte Gesamtkühlleistung des Feineinschnitts einfach möglich.

Besonders vorteilhaft ist die Ausbildung eines Fahrzeugreifens gemäß den Merkmalen von Anspruch 16, wobei in beiden Einschnittwänden derartige Nuten bzw. Rippen ausgebildet sind. Hierdurch kann eine Kühlung beider Seiten des durch den Feineinschnitt getrennten Profilblocks und somit eine weitere Optimierung der Kühlung des Profilblocks umgesetzt werden.

Besonders vorteilhaft ist die Ausbildung eines Fahrzeugreifens gemäß den Merkmalen von Anspruch 17, wobei H₁ mit 0,5mm≤H₁≤1mm ausgebildet ist.

Besonders vorteilhaft ist die Ausbildung eines Fahrzeugreifens gemäß den Merkmalen von Anspruch **18,** wobei die Nut bzw. Rippe mit einer in der Einschnittwand gemessenen Breite B mit 1mm≤B≤5mm ausgebildet ist. Die Breite ermöglicht dabei eine gute Ausformbarkeit bei optimierter Kühlwirkung.

Besonders vorteilhaft ist die Ausbildung eines Fahrzeugreifens gemäß den Merkmalen von Anspruch 19, wobei der Feineinschnitt in wenigstens eine Rille mündet. Hierdurch kann der Griff bei winterlichen Straßenbedingungen verbessert werden.

Die Erfindung wird im Folgenden an Hand der in den Figuren 1 bis 10 dargestellten Ausführungsbeispiele näher erläutert. Hierin zeigen
- Fig.1: einen Umfangsabschnitt eines Laufstreifenprofils eines Pkw-Reifens in Draufsicht,
- Fig.2: einen Abschnitt des Laufstreifenprofils von Fig.1 in Draufsicht,
- Fig.3: die Darstellung eines Profilblockelementes von Fig.2 in Schnittdarstellung gemäß Schnitt III-III von Fig.2,
- Fig.4: das Profilblockelement von Fig.2 in Schnittdarstellung gemäß Schnitt IV-IV von Fig.3,
- Fig.5: das Profilblockelement von Fig.2 in Schnittdarstellung gemäß Schnitt V-V von Fig.2,
- Fig.6: das Profilblockelement von Fig.2 in Schnittdarstellung gemäß Schnitt VI-VI von Fig.5,
- Fig.7: die Darstellung eines Profilblockelementes von Fig.2 in alternativer Ausführung analog zur Schnittdarstellung gemäß Schnitt III-III von Fig.2,
- Fig.8: das Profilblockelement von Fig.7 in Schnittdarstellung gemäß Schnitt VIII-VIII von Fig.7,
- Fig.9: das Profilblockelement von Fig.7 in Schnittdarstellung gemäß Schnitt V-V von Fig.2 und
- Fig.10: das Profilblockelement von Fig.7 in Schnittdarstellung gemäß Schnitt X-X von Fig.9.

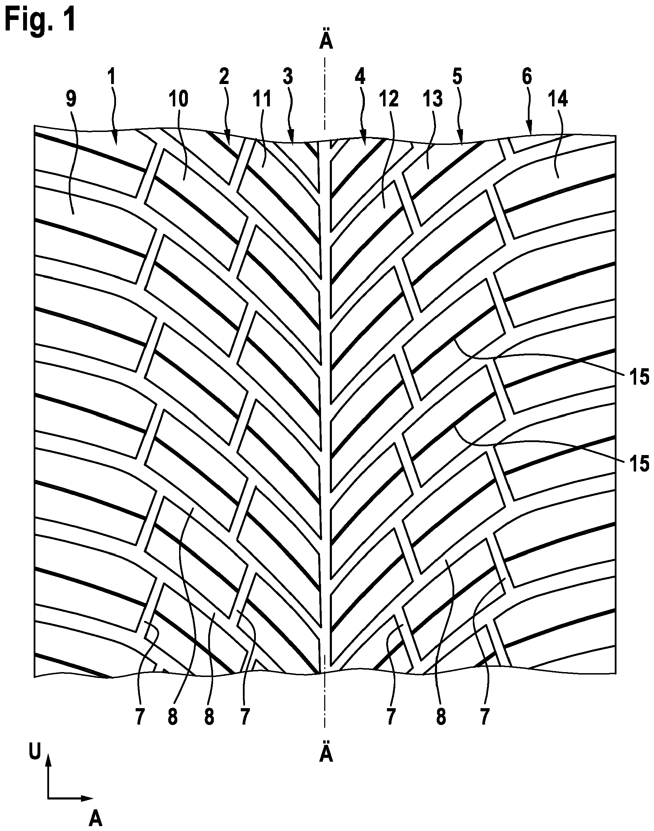

Die Figuren 1 bis 6 zeigen ein Laufstreifenprofil eines Fahrzeugluftreifens eines Personenkraftwagens (Pkw), das in bekannter Weise aus in axialer Richtung A des Fahrzeugluftreifens nebeneinander angeordneten Profilblockreihen 1, 2, 3, 4, 5 und 6 ausgebildet ist. Die Profilblockreihen 1, 2, 3, 4, 5 und 6 erstrecken sich jeweils in Umfangsrichtung U des Fahrzeugluftreifens über dessen gesamten Umfang. In Figur 1 ist die Äquatorebene Ä-Ä des Fahrzeugluftreifens eingezeichnet.

Die Profilblockreihen 1 und 6 sind jeweils in einer Reifenschulter ausgebildet und bilden die Schulterprofilblockreihen. Die Profilblockreihe 1 ist in bekannter Weise aus über den Umfang des Fahrzeugluftreifens verteilten, in Umfangsrichtung U hintereinander angeordneten und jeweils durch Querrillen 8 voneinander beabstandeten Profilblockelementen 9 ausgebildet. Die Profilblockreihe 2 ist in bekannter Weise aus über den gesamten Umfang des Fahrzeugluftreifens verteilten, in Umfangsrichtung U hintereinander angeordneten und jeweils durch Querrillen 8 voneinander getrennten Profilblockelementen 10 ausgebildet. Die Profilblockreihe 3 ist in bekannter Weise aus über den gesamten Umfang des Fahrzeugluftreifens verteilten, in Umfangsrichtung U hintereinander angeordneten und jeweils durch Querrillen 8 voneinander getrennten Profilblockelementen 11 ausgebildet. Die Profilblockreihe 4 ist in bekannter Weise aus über den gesamten Umfang des Fahrzeugluftreifens verteilten, in Umfangsrichtung U hintereinander angeordneten und jeweils durch Querrillen 8 voneinander getrennten Profilblockelementen 12 ausgebildet. Die Profilblockreihe 5 ist in bekannter Weise aus über den gesamten Umfang des Fahrzeugluftreifens verteilten, in Umfangsrichtung U hintereinander angeordneten und jeweils durch Querrillen 8 voneinander getrennten Profilblockelementen 13 bekannter Art ausgebildet. Die Profilblockreihe 6 ist in bekannter Weise aus über den gesamten Umfang des Fahrzeugluftreifens verteilten, in Umfangsrichtung U hintereinander angeordneten und jeweils durch Querrillen 8 voneinander getrennten Profilblockelementen 14 ausgebildet.

Die Profilblockreihe 1 und die Profilblockreihe 2 sind in axialer Richtung A des Fahrzeugluftreifens nebeneinander angeordnet, wobei die Profilblockelemente 9 der Profilblockreihe 1 und die Profilblockelemente 10 der Profilblockreihe 2 in axialer Richtung A durch umfangsorientierte Rillen 7 voneinander getrennt sind. Die Profilblockreihe 2 und die Profilblockreihe 3 sind in axialer Richtung A des Fahrzeugluftreifens nebeneinander angeordnet, wobei die Profilblockelemente 10 der Profilblockreihe 2 und die Profilblockelemente 11 der Profilblockreihe 3 durch umfangsorientierte Rillen 7 voneinander getrennt sind. Die Profilblockreihe 3 und die Profilblockreihe 4 sind in axialer Richtung A des Fahrzeugluftreifens nebeneinander angeordnet, wobei die Profilblockelemente 11 der Profilblockreihe 3 und die Profilblockelemente 12 der Profilblockreihe 4 durch umfangsorientierte Rillen 7 voneinander getrennt sind. Die Profilblockreihe 4 und die Profilblockreihe 5 sind in axialer Richtung A des Fahrzeugluftreifens nebeneinander angeordnet, wobei die Profilblockelemente 12 der Profilblockreihe 4 und die Profilblockreihe 13 der Profilblockreihe 5 in axialer Richtung A durch umfangsorientierte Rillen 7 voneinander getrennt sind. Die Profilblockreihe 5 und die Profilblockreihe 6 sind in axialer Richtung A nebeneinander angeordnet, wobei die Profilblockelemente 13 der Profilblockreihe 5 und die Profilblockreihe 14 der der Profilblockreihe 6 durch umfangsorientierte Rillen 7 in axialer Richtung A des Fahrzeugluftreifens voneinander getrennt sind.

Die umfangsorientierten Rillen 7, welche die Profilblockelemente 11 und die Profilblockelemente 12 voneinander trennen, bilden eine in Umfangsrichtung U des Fahrzeugluftreifens ausgerichtete, über den gesamten Umfang des Fahrzeugluftreifens erstreckte Umfangsrille.

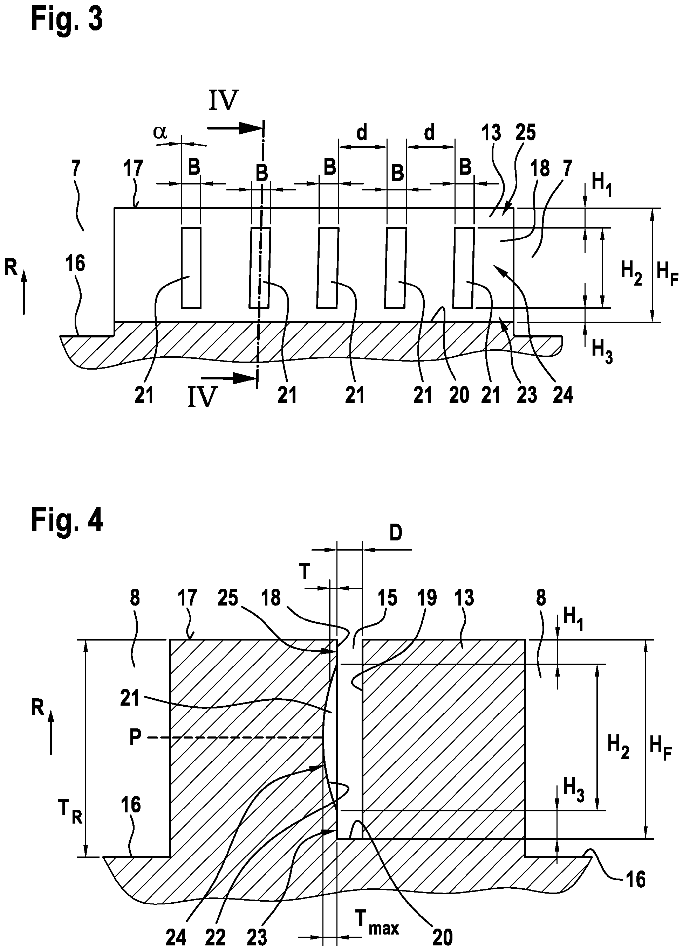

Wie in den Figuren 3 bis 6 am Beispiel eines Profilblockelementes 13 dargestellt ist, werden die Profilblockelemente 9, 10, 11, 12, 13 und 14 in radialer Richtung R des Fahrzeugluftreifens nach außen hin jeweils durch eine radial äußere Oberfläche 17 begrenzt, welche innerhalb der Bodenaufstandsbreite des Fahrzeugluftreifens die Straßenkontaktoberfläche des Reifens bildet.

Die Profilblockelemente 9, 10, 11, 12, 13 bzw. 14 sind in ihrer radial äußeren Oberfläche 17 jeweils mit Feineinschnitten 15 ausgebildet. Diese erstrecken sich im Wesentlichen parallel zu den das jeweilige Profilblockelement 9, 10, 11, 12, 13 bzw. 14 begrenzenden Querrillen 8 durch das Profilblockelement 9, 10, 11, 12, 13 bzw. 14 und münden in die das jeweilige Profilblockelement 9, 10, 11, 12, 13 bzw.14 begrenzenden Umfangsrillen 7.

Die Umfangsrillen 7 und die Querrillen 8 werden in radialer Richtung R nach innen hin jeweils durch einen Rillengrund 16 begrenzt. Die Umfangsrillen 7 und die Querrillen 8 sind dabei mit einer ausgehend von der radial äußeren Oberfläche 17 der jeweils angrenzenden Profilblockelemente 9, 10, 11, 12, 13 und 14 in radialer Richtung R bis zum Rillengrund 16 bemessenen Rillentiefe T_{R} ausgebildet, wobei die Rillentiefe mit 6mm ≤ T_{R} ≤ 10mm ausgebildet ist.

Wie in den Figuren 3 bis 6 anhand eines Feineinschnitts 15 eines Profilblockelementes 13 dargestellt ist, sind die Feineinschnitte 15 in radialer Richtung R nach innen hin jeweils durch einen Einschnittsgrund 20 begrenzt und mit einer Einschnittstiefe H_{F} ausbildet, welche in radialer Richtung R ausgehend von der radial äußeren Oberfläche 17 bis zum Einschnittsgrund 20 bemessen wird. Der Feineinschnitt 15 ist dabei beiderseits des Einschnittsgrundes 20 jeweils von einer Einschnittswand 18 bzw. 19 begrenzt. Die Einschnittswand 18 begrenzt den Feineinschnitt 15 dabei auf einer Seite des Einschnittsgrundes 20. Die Einschnittswand 19 begrenzt den Feineinschnitt 15 auf der anderen Seite des Einschnittsgrundes 20. Die Einschnittswände 18 und 19 erstrecken sich längs der gesamten Erstreckung des Feineinschnittes 15 in der radial äußeren Oberfläche 17 und in radialer Richtung R ausgehend vom Feineinschnittsgrund 20 bis zur radial äußeren Oberfläche 17.

Wie in den Figuren 3 und 4 zu erkennen ist, ist die Einschnittswand 18 längs der Erstreckung des Feineinschnitts 15 in der radial äußeren Oberfläche 17 ausgehend von der radial äußeren Oberfläche 17 in einem radial äußeren Erstreckungsabschnitt 25 der in radialer Richtung R gemessenen Erstreckungshöhe H₁ längs ihrer gesamten Erstreckung im Wesentlichen plan ausgebildet. Ebenso ist die Einschnittswand 18 in einem radial inneren Erstreckungsabschnitt 23 der in radialer Richtung R gemessenen Erstreckungshöhe H₃, welche vom Einschnittsgrund 20 nach radial außen hin bemessen wird, mit einer längs ihrer Erstreckung in Erstreckungsrichtung des Feineinschnitts 15 in der radial äußeren Oberfläche 17 im Wesentlichen planen Oberfläche 17 ausgebildet. Zwischen dem radial äußeren Erstreckungsabschnitt 23 und dem radial inneren Erstreckungsabschnitt 25 ist die Einschnittswand 13 mit ihrem mittleren Erstreckungsabschnitt 24, welcher den radialen Haupterstreckungsabschnitt der Einschnittswand 18 bildet und sich über eine Erstreckungshöhe H₂ in radialer Richtung erstreckt, ausgebildet.

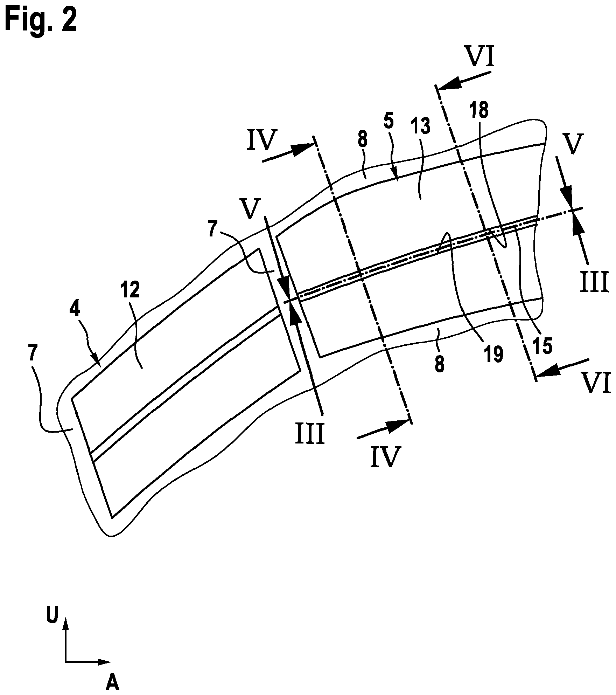

Wie in Fig. 2 und in Fig. 3 zu erkennen ist, ist die Einschnittswand 18 längs der Erstreckung des Feineinschnitts 15 in der radial äußeren Oberfläche 17 in dem mittleren Erstreckungsabschnitt 24 mit mehreren in Erstreckungsrichtung des Feineinschnitts 15 in der radial äußeren Oberfläche 17 hintereinander angeordneten und voneinander beabstandeten Nuten 21 ausgebildet, welche sich mit ihrer Haupterstreckungsrichtung in radialer Richtung R des Fahrzeugluftreifens über die gesamte Erstreckungshöhe H₂ des mittleren Erstreckungsabschnitts 24 erstrecken. Die Nuten 21 sind in der Einschnittswand 18 jeweils längs ihrer Haupterstreckungsrichtung mit einer Breite B ausgebildet. Benachbarte Nuten 21 sind in der Einschnittswand 18 jeweils im Abstand d zueinander angeordnet. Die Nuten 21 sind mit einer senkrecht zur Einschnittswand 18 gemessenen Tiefe T ausgebildet und von einem Nutgrund 22 begrenzt. Wie in Fig.4 zu erkennen ist, ist die Nuttiefe T am radialen äußeren Erstreckungsende der Nut 21 und am radial inneren Erstreckungsende der Nut 21 jeweils mit T = 0 mm ausgebildet. Ausgehend vom radial inneren Erstreckungsende nimmt die Nuttiefe T längs der Erstreckung der Nut 21 in radialer Richtung R nach außen hin bis zu einer Position eines Punktes P degressiv steigend zu und erreicht im Punkt P ihren maximalen Wert Tₘₐₓ. Ab der Position des Punktes P in radialer Richtung R nach außen hin nimmt die Nuttiefe T progressiv steigend ab und erreicht ihr Minimum mit T = 0 mm am radial äußeren Erstreckungsende der Nut 21.

Wie in Figur 4 zu erkennen ist, ist der Nutgrund 22 in den senkrecht Einschnittwand 18 gebildeten Schnittebenenen längs der Haupterstreckungsrichtung der Nut 21 dabei mit einer gekrümmten, beispielsweise kreisbogenförmige Schnittkonturlinie ausgebildet.

Der Punkt P ist dabei im mittleren Erstreckungsdrittel des mittleren Erstreckungsabschnitts 24 der Erstreckungshöhe H₂ ausgebildet. Im dargestellten Ausführungsbeispiel ist der Punkt P in der Positionder halben Erstreckunghöhe H₂ von ausgebildet. Die in radialer Richtung R zwischen radial äußerer Oberfläche 17 und Feineinschnittsgrund 20 gemessene Feineinschnittstiefe H_{F} ist mit H_{F} = H₁ + H₂ + H₃ ausgebildet mit 5mm ≤ H_{F} ≤ 10mm.

Die Höhe H₁ ist bei Neureifen mit 0,5mm ≤ H₁ ≤ 1mm ausgebildet. Die Höhe H₂ ist mit 4mm ≤ H₂ ≤ 9mm ausgebildet. Die Höhe H₃ ist mit 0,5mm ≤ H₃, beispielsweise mit H₃=1mm ausgebildet.

Die Tiefe Tₘₐₓ ist mit 0,3mm ≤ Tₘₐₓ ≤ 1mm gewählt. Beispielsweise ist Tₘₐₓ = 0,5mm ausgebildet.

Die Breite B der Nut 21 ist mit 1 mm ≤ B ≤ 5 mm - beispielweise mit B = 2 mm - ausgebildet.

Die Abstände d zwischen benachbarten Nuten sind mit 3 mm ≤ d ≤ 20 mm - beispielsweise mit d = 5 mm - ausgebildet.

Längs der Erstreckung des Feineinschnittes 15 in der radial äußeren Oberfläche 17 sind in der Einschnittswand 18 die Abstände d und Breiten B derart bemessen, dass mit einer Dichte F von Nuten 21 bestückt ist, wobei F die mittlere Zahl Z von Nuten pro cm Erstreckungslänge der Einschnittswand 18 des Feineinschnitts 15 in der radial äußeren Oberfläche 17 angibt, d.h. F = Z/cm.

Die Feineinschnitte 15 sind mit einer in der radial äußeren Oberfläche 17 gemessenen Feineinschnittsdicke D mit 0,3mm ≤ D ≤ 2mm - beispielsweise mit D = 0,6mm - ausgebildet. Im Erstreckungsbereich der Nuten 21 ist der Feineinschnitt 15 aufgrund der Tiefenerstreckung der Nut 21 mit einer wirksamen Dicke D' mit D'=(T+D) > D ausgebildet.

Die Rillen 7 und 8 sind mit Rillenbreiten 2mm bis 8mm ausgebildet.

Wie in Figur 3 dargestellt ist, sind die Nuten 21 in ihrer Haupterstreckungsrichtung in der Einschnittswand 18 längs ihrer Erstreckung von radial innen nach radial außen hin unter Einschluss eines Neigungswinkels α mit 0°≤ α ≤ 20° zur radialen Richtung R ausgerichtet. Im dargestellten Ausführungsbeispiel ist α = 0° gewählt.

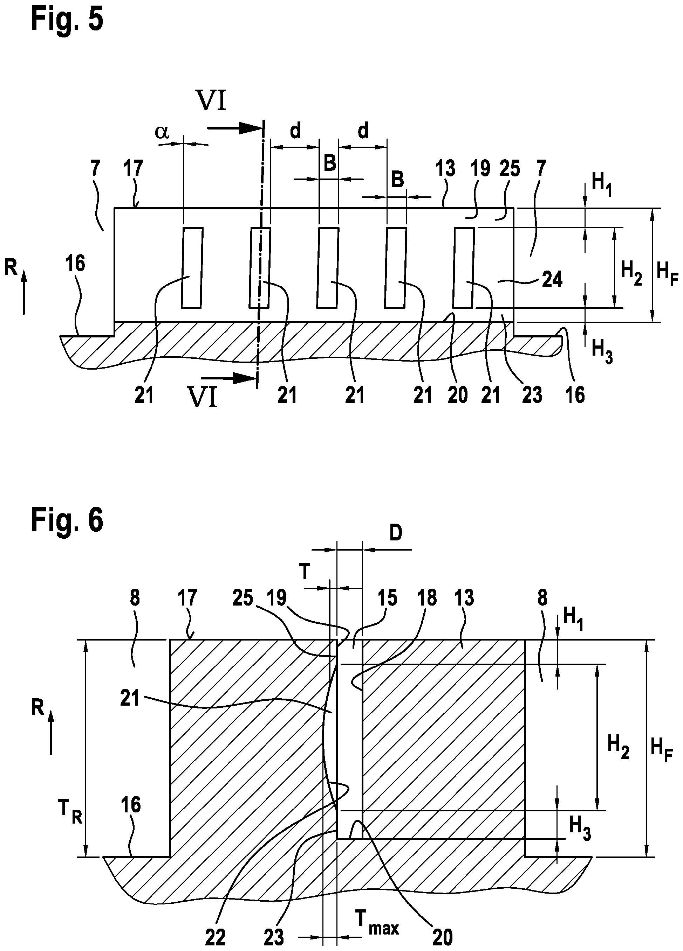

Wie in den Figuren 5 und 6 dargestellt ist, ist auch die Einschnittswand 19 in analoger Weise längs ihrer radialen Erstreckung mit einem radial inneren Erstreckungsabschnitt 23 der Erstreckungshöhe H₃, mit einem mittleren Erstreckungsabschnitt 24 der Erstreckungshöhe H₂ und mit einem radial äußeren Erstreckungsabschnitt 25 der Höhe H₁ ausgebildet. Dabei ist die Einschnittswand 19 innerhalb des Erstreckungsabschnittes 25 und innerhalb des Erstreckungsabschnittes 23 jeweils im Wesentlichen plan und innerhalb des Erstreckungsabschnitts 24 mit analog zu den in den Figuren 3 und 4 dargestellten und oben beschriebenen Nuten 21 ausgebildet.

Längs der Erstreckung des Feineinschnittes 15 in der radial äußeren Oberfläche 17 sind in der Einschnittswand 19 die Abstände d und Breiten B derart bemessen, dass mit einer Dichte F von Nuten 21 bestückt ist, wobei F die mittlere Zahl Z von Nuten pro cm Erstreckungslänge der Einschnittswand 19 des Feineinschnitts 15 in der radial äußeren Oberfläche 17 angibt, d.h. F = Z/cm.

Dabei sind in den dargestellten Ausführungsbeispielen die Nuten 21 der Einschnittwand 18 jeweils längs der Haupterstreckung des Feineinschnittes 15 in der radial äußeren Oberfläche 17 versetzt zu den Nuten 21 der Einschnittswand 19 positioniert. Dabei ist jeweils ein Einschnitt 21 der Einschnittwand 18 zwischen der Position zweier benachbarter Nuten 21 der Einschnittwand 19 und ein Einschnitt 21 der Einschnittwand 19 zwischen der Position zweier benachbarter Nuten 21 der Einschnittwand 18 ausgebildet.

In anderer nicht dargestellter Ausführung ist jeweils längs der Haupterstreckung des Feineinschnittes 15 in der radial äußeren Oberfläche 17 ein Einschnitt 21 der Einschnittwand 19 in gleicher Position des Feineinschnitts 15 wie ein Einschnitt 21 der Einschnittwand 19 positioniert.

Auch wenn die Ausbildung der Feineinschnitte 15 anhand der Figuren 2 bis 6 und der o. g. Beschreibung im Zusammenhang mit Feineinschnitten 15 der Profilblockreihe 5 beschrieben sind, sind diese in einer Ausführung in analoger Weise auch in allen anderen Profilblockreihen 1, 2, 3, 4 und 6 mit entsprechenden Nuten 21 ausgebildet.

Dabei ist die Dichte F der Nuten 21 in den Feineinschnitten 15 der Schulterprofilblockreihen 1 und 6 mit F₁ und in den Feineinschnitten 15 der mittleren Profilblockreihen 3 und 4 und der zwischen den mittleren Profilblockreihen 3 und 4 und den Schulterprofilblockreihen 1 und 2 ausgebildeten Profilblockreihen 2 und 5 jeweils mit F₂ mit F₁>F₂ ausgebildet. F₁ ist mit 1 ≤ F₁ ≤ 4 und F₂ ist mit 0,5 ≤ F₂ ≤ 3 gewählt ausgebildet. Beispielsweise ist F₁ = 3 und F₂=2.

In einer anderen Ausführung ist die Dichte F der Nuten 21 in den Feineinschnitten 15 der Schulterprofilblockreihen 1 und 6 mit F₁, in den Feineinschnitten 15 der mittleren Profilblockreihen 3 und 4 jeweils mit F₂ mit F₁>F₂ und in den Feineinschnitten 15 der zwischen den mittleren Profilblockreihen 3 und 4 und den Schulterprofilblockreihen 1 und 6 ausgebildeten Profilblockreihen 2 und 5 jeweils mit F₃ mit F₁> F₃> F₂ ausgebildet.

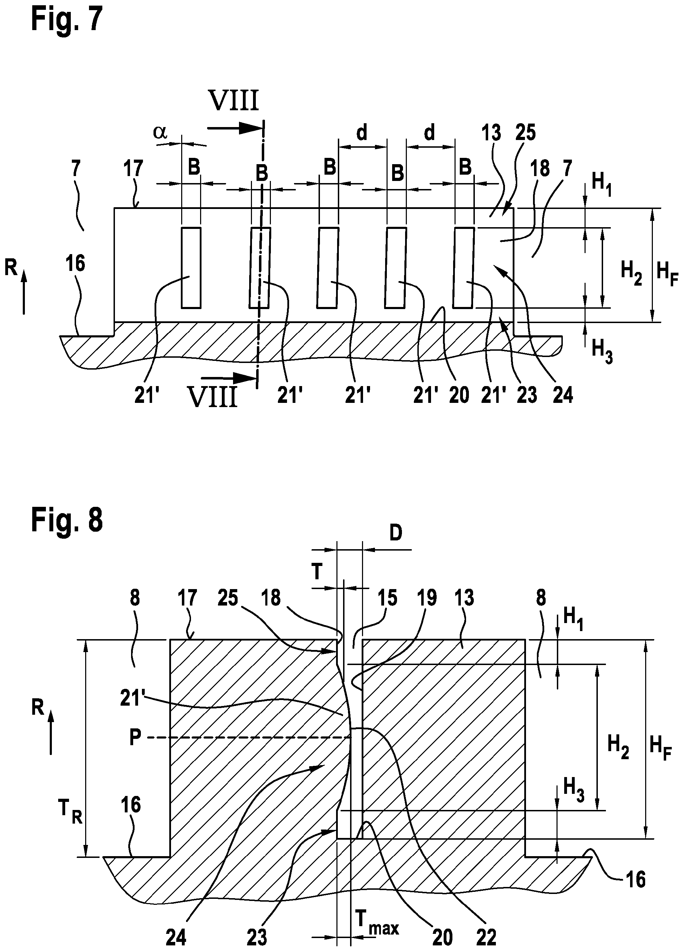

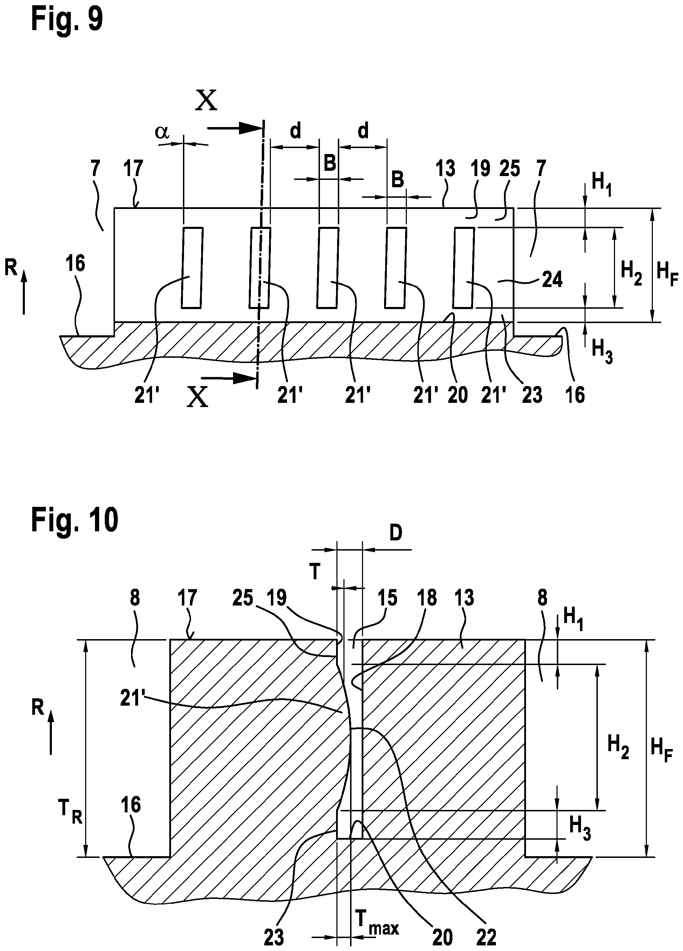

In den Figuren 7 bis 10 ist ein weiteres Ausführungsbeispiel der Feineinschnitte dargestellt, bei denen in den Einschnittwänden 18 bzw. 19 jedoch nicht mit in radialer Richtung R erstreckten Nuten 2, sondern stattdessen in analoger Weise mit in radialer Richtung R erstreckten, erhabenen Rippen 21' ausgebildet sind. Die Rippen 21' erstrecken sich dabei in analoger Weise im mittleren Erstreckungsabschnitt 24 der Einschnittswand 18 bzw. 19 und sind mit einer senkrecht zur jeweiligen Einschnittswand 18 bzw. 19 in Richtung zur gegenüberliegenden Einschnittwand 19 bzw. 18 gemessenen Rippentiefe T ausgebildet. Die Rippen 21' erstrecken sich dabei mit ihrer Haupterstreckungsrichtung in analoger Weise unter Einschluss eines Neigungswinkels α zur radialen Richtung R. Benachbarte Rippen 21 'sind in analoger Weise voneinander mit einem Abstand d zu einander in der Einschnittwand 18 bzw. 19 positioniert und längs ihrer Haupterstreckungsrichtung mit einer in der jeweiligen Einschnittswand 18 bzw. 19 gemessenen Breite B ausgebildet. Die Rippentiefe T ist - wie in Figur 8 zu erkennen ist - am radial äußeren Erstreckungsende der Rippe 21' und am radial inneren Erstreckungsende der Rippe 21' jeweils mit T = 0 mm ausgebildet. Ausgehend vom radial inneren Erstreckungsende nimmt die Rippentiefe T längs der Erstreckung der Rippe 21' in radialer Richtung R nach außen hin bis zu einer Position eines Punktes P degressiv steigend zu und erreicht im Punkt P ihren maximalen Wert Tₘₐₓ. Ab der Position des Punktes P nimmt die Rippentiefe T längs der Erstreckung der Rippe 21' in radialer Richtung R nach außen hin progressiv steigend ab und erreicht ihr Minimum mit T = 0 mm am radial äußeren Erstreckungsende der Rippe 21'.

Die Angaben für die Erstreckungen H₁, H₂, H₃, H_{F} für den Winkel a, für den Abstand d, die Breite B sowie für die Dichten F der längs der Erstreckung einer Einschnittwand 18 bzw. 19 ausgebildeten Rippen 21' entsprechend den im Zusammenhang mit den oben beschriebenen Ausbildungen am Beispiel von Nuten 21 erfolgten Angaben.

**Bezugszeichenliste**

| | | | |
|---|---|---|---|
| 1 | Blockreihe | | |
| 2 | Blockreihe | | |
| 3 | Blockreihe | | |
| 4 | Blockreihe | | |
| 5 | Blockreihe | | |
| 6 | Blockreihe | | |
| 7 | Umfangsrille | | |
| 8 | Querrille | | |
| 9 | Blockelement | | |
| 10 | Blockelement | | |
| 11 | Blockelement | | |
| 12 | Blockelement | | |
| 13 | Blockelement | | |
| 14 | Blockelement | | |
| 15 | Feineinschnitt | | |
| 16 | Rillengrund | | |
| 17 | Radial äußere Oberfläche | | |
| 18 | Einschnittwand | | |
| 19 | Einschnittwand | | |
| 20 | Einschnittgrund | | |
| 21 | Nut, | 21' | Rippe |
| 22 | Nutgrund | | |
| 23 | Abschnitt | | |
| 24 | Abschnitt | | |
| 25 | Abschnitt | | |

## Patentansprüche

1. Laufstreifenprofil eines Fahrzeugreifens - insbesondere eines PKW-Fahrzeugreifens - mit durch Rillen (7,8) begrenzten Profilelementen (13) und mit in Profilelementen (13) ausgebildeten Feineinschnitten (15), wobei die Profilelemente (13) in radialer Richtung R nach außen hin von einer radial äußeren Oberfläche (17) und die Feineinschnitte (15) nach radial innen hin von einem Einschnittgrund (20) und beiderseits des Einschnittgrunds (20) jeweils von einer Einschnittwand (18,19) begrenzt werden, wobei der Feineinschnitt (15) jeweils mit einer Dicke D ausgebildet ist, mit Feineinschnitten (15), die mit voneinander beabstandet angeordneten, begrenzten Erstreckungsabschnitten ausgebildet sind, in denen der Feineinschnitt (15) mit einer Dicke D' mit D'≠D ausgebildet ist, wobei der begrenzte Erstreckungsabschnitt jeweils durch eine in einer (18) der beiden Einschnittwände (18,19) in radialer Richtung R erstreckte Nut (21) oder Rippe (21') mit einer in radialer Richtung R in der Einschnittwand (18) gemessenen Erstreckungslänge H₂ ausgebildet ist, wobei längs der Erstreckung des Feineinschnitts in seiner Erstreckungsrichtung in der radial äußeren Oberfläche (17) die in einer Einschnittwand (18,19) des Feineinschnittes (15) jeweils von einander beanbstandeten, begrenzten Erstreckungsabschnitte mit einer Dichte F verteilt angeordnet sind, wobei die Dichte F die Zahl der längs der Erstreckung des Feinschnitts (15) pro cm Länge ausgebildeten Erstreckungsabschnitte angibt, wobei im Bereich der Reifenschultern Profilelemente (9,14) mit ersten Feineinschnitten (15) mit einer Dichte F**₁** von in einer Einschnittwand (18) begrenzten Erstreckungsabschnitten ausgebildet sind und wobei in wenigstens einem zwischen den Reifenschultern ausgebildeten, axialen mittleren Erstreckungsbereich des Reifens Profilelemente (2,3,4,5) mit zweiten Feineinschnitten (15) mit einer Dichte F2 mit F₁> F2 in einer Einschnittwand (18) begrenzten Erstreckungsabschnitten ausgebildet sind,
**dadurch gekennzeichnet,**
**dass** die Position (P) der maximalen Tiefe T_{MAX} der senkrecht zur Einschnittwand (18) gemessenen Tiefenerstreckung T der Nut (21) bzw. der Rippe im mittleren Drittel der radialen Erstreckungslänge H₂ der Nut (21) bzw. der Rippe ausgebildet ist.

2. Laufstreifenprofil gemäß den Merkmalen von Anspruch 1,
wobei F₁ mit 1 ≤ F₁ ≤ 4 ausgebildet ist.

3. Laufstreifenprofil gemäß den Merkmalen von Anspruch 1 oder 2,
wobei F₂ mit 0,5 ≤ F₂ ≤ 3 ausgebildet ist.

4. Laufstreifenprofil gemäß den Merkmalen von einem oder mehreren der vorangegangenen Ansprüche,
wobei wenigstens zwischen einer Reifenschulter und dem axial mittleren Erstreckungsabschnitt in einem axialen Zwischenabschnitt des Laufstreifenprofils Profilelemente (10,13) mit dritten Feineinschnitten (15) mit einer Dichte F₃ von in einer Einschnittwand (18) begrenzten Erstreckungsabschnitten ausgebildet sind mit F₁ > F₃> F₂.

5. Laufstreifenprofil gemäß den Merkmalen von einem oder mehreren der vorangegangenen Ansprüche,
wobei die im Bereich der Reifenschulter ausgebildeten Profilelemente (9,14) Profilblockelemente einer Schulterprofilblockreihe (1,6) sind.

6. Laufstreifenprofil gemäß den Merkmalen von einem oder mehreren der vorangegangenen Ansprüche,
wobei die im zwischen den Reifenschultern ausgebildeten, axial mittleren Erstreckungsbereich des Reifenprofils ausgebildeten Profilelemente (11,12) Profilblockelemente einer zentralen Profilblockreihe (3,4) sind.

7. Laufstreifenprofil gemäß den Merkmalen von einem oder mehreren der vorangegangenen Ansprüche,
wobei die in einer Einschnittwand (18,19) eines Feineinschnitts (15) ausgebildeten begrenzten Erstreckungsabschnitte jeweils voneinander, vom Einschnitttgrund (20) und von der radial äußeren Oberflächen (17) beabstandet angeordnet ausgebildet sind.

8. Laufstreifenprofil gemäß den Merkmalen von einem oder mehreren der vorangegangenen Ansprüche,
wobei die den begrenzten Erstreckungsabschnitt in einer Einschnittwand (18) eines mit Feineinschnitts (15) bildende Nut (21) oder Rippe (21 ')sich in radialer Richtung R nach außen in der Einschnittwand (18) bis in eine Position im Abstand H₁ > 0 von der radial äußeren Oberfläche (17) erstreckt und dort endet.

9. Laufstreifenprofil gemäß den Merkmalen von einem oder mehreren der vorangegangenen Ansprüche,
wobei die Nut (21) bzw. die Rippe mit einer senkrecht zur Einschnittwand (18) gemessenen, längs der Erstreckung der Nut (21) bzw. der Rippe (21') veränderten Tiefenerstreckung T ausgebildet ist, wobei die Nut (21) bzw. die Rippe (21') mit einem radial inneren Erstreckungsabschnitt, in welchem die Tiefe T längs der Erstreckung der Nut (21) bzw. der Rippe (21') von radial innen nach außen hin von T=0 bis zur Erreichung der maximalen Tiefe T_{MAX} stetig zunimmt, und mit einem radial äußeren Erstreckungsabschnitt, in welchem die Tiefe T längs der Erstreckung der Nut (21) bzw. der Rippe (21') von radial innen nach außen hin von der Position ihrer maximalen Tiefe T_{MAX} bis zur Erreichung der Tiefe T=0 im Abstand H₁ von der radial äußeren Oberfläche (17) stetig abnimmt.

10. Laufstreifenprofil gemäß den Merkmalen von Anspruch 9,
wobei der radial äußere Erstreckungsabschnitt der Nut (21) bzw. der Rippe (21') unmittelbar an den radial inneren Erstreckungsabschnitt der Nut (21) bzw. der Rippe anschließt.

11. Laufstreifenprofil gemäß den Merkmalen von Anspruch 1 oder 2,
wobei der die Nut (21) bzw. die Rippe (21') nach radial innen hin begrenzende Nutanfang bzw. Rippenanfang in der Einschnittwand (18) in einer Position im in radialer Richtung R nach außen hin gemessenen Abstand H₃ > 0 - insbesondere wobei mit 0,5mm ≤ H₃ ausgebildet ist - vom Einschnittgrund (20) ausgebildet ist.

12. Laufstreifenprofil gemäß den Merkmalen von einem oder mehreren der vorangegangenen Ansprüche,
wobei die maximale Tiefe T_{MA}x mit 0,3mm≤ T_{MAX} ≤1mm ausgebildet ist.

13. Laufstreifenprofil gemäß den Merkmalen von einem oder mehreren der vorangegangenen Ansprüche,
wobei die Nut (21) bzw. die Rippe (21') längs ihrer radialen Erstreckung von innen nach außen im radial inneren Erstreckungsabschnitt in ihrem Tiefenverlauf ausgehend der Position mit T=0 bis zur Position (P) der maximalen Tiefe T_{MAX} mit degressiv zunehmender Tiefe und im radial äußeren Erstreckungsabschnitt ausgehend von der Position (P) ihrer maximalen Tiefe T_{MAX} bis zur Erreichung Position der Tiefe T=0 mit progressiv abnehmender Tiefe ausgebildet ist.

14. Laufstreifenprofil gemäß den Merkmalen von einem oder mehreren der vorangegangenen Ansprüche,
wobei die Nut (21) bzw. die Rippe (21') mit ihrer Haupterstreckungsrichtung in der Einschnittwand (18) unter Einschluss eines Neigungswinkels α zur radialen Richtung R des Reifens mit 0°≤α≤20° ausgerichtet ist.

15. Laufstreifenprofil gemäß den Merkmalen von einem oder mehreren der vorangegangenen Ansprüche,
wobei längs der Erstreckung des Feineinschnitts (15) in der radial äußeren Oberfläche (17) in einer Einschnittwand (18) derartige Nuten (21) bzw. Rippen verteilt hintereinander angeordnet sind, wobei benachbart hintereinander angeordnete Nuten (21) bzw. Rippen (21') einer Einschnittwand (18) jeweils mit in der Einschnittwand (18) gemessenem Abstand d mit 3mm≤d≤20mm zueinander positioniert sind.

16. Laufstreifenprofil gemäß den Merkmalen von einem oder mehreren der vorangegangenen Ansprüche,
wobei in beiden Einschnittwänden (18,19) derartige Nuten (21) bzw. Rippen (21') ausgebildet sind.

17. Laufstreifenprofil gemäß den Merkmalen von Anspruch 8,
wobei H₁ mit 0,5mm ≤H₁≤1mm ausgebildet ist.

18. Laufstreifenprofil gemäß den Merkmalen von einem oder mehreren der vorangegangenen Ansprüche,
wobei die Nut (21) bzw. Rippe (21') mit einer in der Einschnittwand (18,19) gemessenen Breite B mit 1mm ≤B≤5mm ausgebildet ist.

19. Laufstreifenprofil gemäß den Merkmalen von einem oder mehreren der vorangegangenen Ansprüche,
wobei der Feineinschnitt (15) jeweils in wenigstens eine Rille (7) mündet.

## Claims

1. Tread profile of a vehicle tyre - in particular a passenger car tyre - with profile elements (13) delimited by grooves (7, 8) and with sipes (15) formed in profile elements (13), wherein the profile elements (13) are delimited outwards in the radial direction R by a radially outer surface (17) and the sipes (15) are delimited radially inwards by a sipe base (20) and on both sides of the sipe base (20) respectively by a sipe wall (18, 19), wherein the sipe (15) is formed in each case with a thickness D, with sipes (15), which are formed with delimited portions of extent which are arranged at a distance from one another and in which the sipe (15) is formed with a thickness D', where D' ≠ D, wherein the delimited portion of extent is formed in each case by a notch (21) or rib (21'), which is made to extend in the radial direction R in one (18) of the two sipe walls (18, 19) and has a length of extent H₂, measured in the radial direction R in the sipe wall (18), wherein, along the extent of the sipe in its direction of extent in the radially outer surface (17), the delimited portions of extent that are respectively at a distance from one another in a sipe wall (18, 19) of the sipe (15) are arranged distributed with a density F, where the density F indicates the number of portions of extent formed along the extent of the sipe (15) per cm of length, wherein profile elements (9, 14) comprising first sipes (15), with a density F₁ of portions of extent delimited in a sipe wall (18), are formed in the region of the tyre shoulders and wherein profile elements (2, 3, 4, 5) comprising second sipes (15), with a density F₂, where F₁ > F₂, portions of extent delimited in a sipe wall (18) are formed in at least one axially middle region of extent of the tyre formed between the tyre shoulders, **characterized**
**in that** the position (P) of the maximum depth T_{MAX} of the depth of extent T of the notch (21) or the rib, measured perpendicularly to the sipe wall (18), is formed in the middle third of the radial length of extent H₂ of the notch (21) or the rib.

2. Tread profile according to the features of Claim 1,
wherein F₁ is formed, where 1 ≤ F₁ ≤ 4.

3. Tread profile according to the features of Claim 1 or 2,
wherein F₂ is formed, where 0.5 ≤ F₂ ≤ 3.

4. Tread profile according to the features of one or more of the preceding claims,
wherein profile elements (10, 13) comprising third sipes (15) with a density F₃ of portions of extent delimited in a side wall (18), where F₁ > F₃ > F₂, are formed at least between a tyre shoulder and the axially middle portion of extent in an axial intermediate portion of the tread profile.

5. Tread profile according to the features of one or more of the preceding claims,
wherein the profile elements (9, 14) formed in the region of the tyre shoulder are profile block elements of a row of shoulder profile blocks (1, 6).

6. Tread profile according to the features of one or more of the preceding claims,
wherein the profile elements (11, 12) formed in the axially middle region of extent of the tyre profile formed between the tyre shoulders are profile block elements of a central row of profile blocks (3, 4).

7. Tread profile according to the features of one or more of the preceding claims,
wherein the delimited portions of extent formed in a sipe wall (18, 19) of a sipe (15) are formed such that they are respectively arranged at a distance from one another, from the sipe base (20) and from the radially outer surfaces (17).

8. Tread profile according to the features of one or more of the preceding claims,
wherein the notch (21) or ridge (21') forming the delimited portion of extent in a sipe wall (18) of a with sipe (15) extends outwards in the radial direction R in the sipe wall (18) to a position at a distance H₁ > 0 from the radially outer surface (17) and ends there.

9. Tread profile according to the features of one or more of the preceding claims,
wherein the notch (21) or the rib is formed with a depth of extent T, measured perpendicularly to the sipe wall (18), that is changed along the extent of the notch (21) or the rib (21'), wherein the notch (21) or the rib (21') with a radially inner portion of extent, in which the depth T steadily increases along the extent of the notch (21) or the rib (21') from radially inside outwards from T = 0 to reaching the maximum depth T_{MAX}, and with a radially outer portion of extent, in which the depth T steadily decreases along the extent of the notch (21) or the rib (21') from radially inside outwards from the position of its maximum depth T_{MAX} to reaching the depth T = 0 at the distance H₁ from the radially outer surface (17).

10. Tread profile according to the features of Claim 9,
wherein the radially outer portion of extent of the notch (21) or the rib (21') directly adjoins the radially inner portion of extent of the notch (21) or the rib.

11. Tread profile according to the features of Claim 1 or 2,
wherein the beginning of the notch or beginning of the rib delimiting the notch (21) or the rib (21') radially inwards is formed in the sipe wall (18) in a position at the distance H₃ > 0, measured outwards in the radial direction R from the sipe base (20) - in particular is formed where 0.5 mm ≤ H₃-.

12. Tread profile according to the features of one or more of the preceding claims,
wherein the maximum depth T_{MAX} is formed, where 0.3 mm ≤ T_{MAX} ≤ 1 mm.

13. Tread profile according to the features of one or more of the preceding claims,
wherein the notch (21) or the rib (21') is formed along its radial extent from inside outwards in the radially inner portion of extent with a degressively increasing depth in its depth profile from the position where T = 0 to the position (P) of the maximum depth T_{MAX} and in the radially outer portion of extent with a progressively decreasing depth from the position (P) of its maximum depth T_{MAX} to reaching the position of the depth T = 0.

14. Tread profile according to the features of one or more of the preceding claims,
wherein the notch (21) or the rib (21') is aligned with its main direction of extent in the sipe wall (18) to form an angle of inclination α with the radial direction R of the tyre, where 0° ≤ α ≤ 20°.

15. Tread profile according to the features of one or more of the preceding claims,
wherein such notches (21) or ribs are arranged distributed one behind the other along the extent of the sipe (15) in the radially outer surface (17) in a sipe wall (18), wherein notches (21) or ribs (21') of a sipe wall (18) that are arranged adjacently one behind the other are respectively positioned in relation to one another at the distance d, measured in the sipe wall (18), where 3 mm ≤ d ≤ 20 mm.

16. Tread profile according to the features of one or more of the preceding claims,
wherein such notches (21) or ribs (21') are formed in both sipe walls (18, 19).

17. Tread profile according to the features of Claim 8,
wherein H₁ is formed, where 0.5 mm ≤ H₁ ≤ 1 mm.

18. Tread profile according to the features of one or more of the preceding claims,
wherein the notch (21) or rib (21') is formed with a width B, measured in the side wall (18, 19), where 1 mm ≤ B ≤ 5 mm.

19. Tread profile according to the features of one or more of the preceding claims,
wherein the sipe (15) respectively opens out into at least one groove (7).

## Revendications

1. Profil de bande de roulement d'un bandage de véhicule, notamment d'un bandage de véhicule pour voiture de tourisme, comprenant des éléments de profil (13) délimités par des rainures (7, 8) et comprenant des entailles fines (15) formées dans les éléments de profil (13), les éléments de profil (13) étant délimités dans la direction radiale R vers l'extérieur par une surface radialement à l'extérieur (17) et les entailles fines (15) étant délimitées vers l'intérieur dans le sens radial par un fond d'entaille (20) et respectivement par une paroi d'entaille (18, 19) des deux côtés du fond d'entaille (20), l'entaille fine (15) étant respectivement formée avec une épaisseur D, comprenant des entailles fines (15) qui sont formées avec des portions d'extension délimitées disposées en étant espacées les unes des autres, dans lesquelles l'entaille fine (15) est formée avec une épaisseur D', avec D' ≠ D, la portion d'extension délimitée étant respectivement formée par une gorge (21) ou une membrure (21') qui s'étend dans la direction radiale R dans l'une (18) des deux parois d'entaille (18, 19) avec une longueur d'extension H₂ mesurée dans la direction radiale R dans la paroi d'entaille (18), les portions d'extension délimitées, respectivement espacées les unes des autres dans une paroi d'entaille (18, 19) de l'entaille fine (15) étant disposées de manière distribuée avec une densité F le long de l'extension de l'entaille fine dans la direction de son extension dans la surface radialement à l'extérieur (17), la densité F indiquant le nombre de portions d'extension formées par cm de longueur le long de l'extension de l'entaille fine (15), des éléments de profil (9, 14) comprenant des premières entailles fines (15) étant formés avec une densité F₁ par des portions d'extension délimitées dans une paroi d'entaille (18) dans la zone des épaulements de bandage, et des éléments de profil (2, 3, 4, 5) comprenant des deuxièmes entailles fines (15) étant formés avec une densité F₂, avec F₁ > F₂, des portions d'extension délimitées dans une paroi d'entaille (18) dans au moins une zone d'extension du bandage axiale au centrale, formée entre les épaulements du bandage,
**caractérisé en ce**
**que** la position (P) de la profondeur maximale **T_{MAX}** de l'extension en profondeur T, mesurée perpendiculairement à la paroi d'entaille (18), de la gorge (21) ou de la membrure est formée dans le tiers central de la longueur d'extension H₂ radiale de la gorge (21) ou de la membrure.

2. Profil de bande de roulement selon les caractéristiques de la revendication 1, F₁ étant configurée telle que 1 ≤ F₁ ≤ 4.

3. Profil de bande de roulement selon les caractéristiques de la revendication 1 ou 2, F₂ étant configurée telle que 0,5 ≤ F₂ ≤ 3.

4. Profil de bande de roulement selon les caractéristiques d'une ou plusieurs des revendications précédentes, des éléments de profil (10, 13) comprenant des troisièmes entailles fines (15) avec une densité F₃ de portions d'extension délimitées dans une paroi d'entaille (18) étant formés au moins entre un épaulement de bandage et la portion d'extension axialement au centre dans une portion intermédiaire axiale du profil de bande de roulement, avec F₁ > F₃ > F₂.

5. Profil de bande de roulement selon les caractéristiques d'une ou plusieurs des revendications précédentes, les éléments de profil (9, 14) formés dans la zone des épaulements de bandage étant des éléments de bloc de profil d'une rangée de blocs de profil d'épaulement (1, 6).

6. Profil de bande de roulement selon les caractéristiques d'une ou plusieurs des revendications précédentes, les éléments de profil (11, 12) formés dans la zone d'extension du profil de bandage, axialement au centre, formée entre les épaulements de bandage, étant des éléments de bloc de profil d'une rangée de blocs de profil centrale (3, 4).

7. Profil de bande de roulement selon les caractéristiques d'une ou plusieurs des revendications précédentes, les portions d'extension délimitées formées dans une paroi d'entaille (18, 19) d'une entaille fine (15) étant formées respectivement espacées les unes des autres, du fond d'entaille (20) et des surfaces radialement à l'extérieur (17).

8. Profil de bande de roulement selon les caractéristiques d'une ou plusieurs des revendications précédentes, la gorge (21) ou la membrure (21') formant la portion d'extension délimitée dans une paroi d'entaille (18) d'une avec entaille fine (15) s'étendant dans la direction radiale R vers l'extérieur dans la paroi d'entaille (18) jusque dans une position à un écart H₁ > 0 de la surface radialement à l'extérieur (17) et s'y terminant.

9. Profil de bande de roulement selon les caractéristiques d'une ou plusieurs des revendications précédentes, la gorge (21) ou la membrure étant formée avec une extension en profondeur T, mesurée perpendiculairement à la paroi d'entaille (18) et variable le long de l'extension de la gorge (21) ou de la membrure (21'), la gorge (21) ou la membrure (21') avec une portion d'extension interne dans le sens radial, dans laquelle la profondeur T augmente constamment le long de l'extension de la gorge (21) ou de la membrure (21') dans le sens radial de l'intérieur vers l'extérieur à partir de T = 0 jusqu'à atteindre la profondeur maximale T_{MAX}, et avec une portion d'extension externe dans le sens radial, dans laquelle la profondeur T diminue constamment le long de l'extension de la gorge (21) ou de la membrure (21') dans le sens radial de l'intérieur vers l'extérieur à partir de la position de la profondeur maximale T_{MA}x jusqu'à atteindre la profondeur T = 0 à l'écart H₁ de la surface radialement à l'extérieur (17).

10. Profil de bande de roulement selon les caractéristiques de la revendication 9, la portion d'extension radialement à l'extérieur de la gorge (21) ou de la membrure (21') se rattachant directement à la portion d'extension radialement à l'intérieur de la gorge (21) ou de la membrure.

11. Profil de bande de roulement selon les caractéristiques de la revendication 1 ou 2, le début de gorge ou le début de membrure dans la paroi d'entaille (18), qui délimite la gorge (21) ou la membrure (21') dans le sens radial vers l'intérieur, étant formé à une position à un écart H₃ > 0 du fond de l'entaille (20), mesuré dans la direction radiale R vers l'extérieur, notamment étant formé avec 0,5 mm ≤ H₃.

12. Profil de bande de roulement selon les caractéristiques d'une ou plusieurs des revendications précédentes, la profondeur maximale T_{MA}x étant formée avec 0,3 mm ≤ T_{MAX} ≤ 1 mm.

13. Profil de bande de roulement selon les caractéristiques d'une ou plusieurs des revendications précédentes, le tracé de profondeur de la gorge (21) ou de la membrure (21'), le long de son extension radiale de l'intérieur vers l'extérieur dans la portion d'extension radialement à l'intérieur, étant configuré, en partant de la position avec T = 0 jusqu'à la position (P) de la profondeur maximale T_{MAX}, avec une profondeur qui augmente de manière dégressive et, dans la portion d'extension radialement à l'extérieur, en partant de la position (P) de sa profondeur maximale T_{MAX} jusqu'à atteindre la position de la profondeur T = 0, avec une profondeur qui diminue progressivement.

14. Profil de bande de roulement selon les caractéristiques d'une ou plusieurs des revendications précédentes, la gorge (21) ou la membrure (21') étant orientée avec sa direction d'extension principale dans la paroi d'entaille (18) en formant un angle d'inclinaison α par rapport à la direction radiale R du bandage, avec 0° ≤ α ≤ 20°.

15. Profil de bande de roulement selon les caractéristiques d'une ou plusieurs des revendications précédentes, des gorges (21) ou membrures de ce type étant disposées distribuées les unes derrière les autres dans une paroi d'entaille (18) le long de l'extension de l'entaille fine (15) dans la surface radialement à l'extérieur (17), des gorges (21) ou membrures (21') disposées adjacentes les unes derrière les autres d'une paroi d'entaille (18) étant respectivement positionnées les unes par rapport aux autres avec un écart d mesuré dans la paroi d'entaille (18), avec 3 mm ≤ d ≤ 20 mm.

16. Profil de bande de roulement selon les caractéristiques d'une ou plusieurs des revendications précédentes, des gorges (21) ou membrures (21') de ce type étant formées dans les deux parois d'entaille (18, 19) .

17. Profil de bande de roulement selon les caractéristiques de la revendication 8, H₁ étant formé de telle sorte que 0,5 mm ≤ H₁ ≤ 1 mm.

18. Profil de bande de roulement selon les caractéristiques d'une ou plusieurs des revendications précédentes, la gorge (21) ou la membrure (21') étant formée avec une largeur B mesurée dans la paroi d'entaille (18, 19), avec 1 mm ≤ B ≤ 5 mm.

19. Profil de bande de roulement selon les caractéristiques d'une ou plusieurs des revendications précédentes, l'entaille fine (15) débouchant respectivement dans au moins une rainure (7).
